# FASCICULE DE BREVET EUROPEEN

(11) **EP 4 164 873 B1**
(45) Date de publication et mention de la délivrance du brevet: **02.09.2026**
(21) Numéro de dépôt: 21758399.6
(22) Date de dépôt: 16.07.2021
(51) Int. Cl.: B29C 70/68, B29C 70/84, B29C 70/72, B32B 37/02, B29C 70/06, B64C 1/06, B29C 65/50, B29C 65/00, B29D 99/00, E04C 3/28

(54) **STRUCTURE DE RAIDISSAGE AMELIOREE DESTINEE A RAIDIR UNE PIECE EN MATERIAU COMPOSITE THERMODURCISSABLE ET PROCEDE DE RAIDISSAGE ASSOCIE**
VERBESSERTE VERSTEIFUNGSSTRUKTUR ZUR VERSTEIFUNG EINER KOMPONENTE AUS WÄRMEHÄRTBAREM VERBUNDSTOFF UND ZUGEHÖRIGES VERSTEIFUNGSVERFAHREN
IMPROVED STIFFENING STRUCTURE INTENDED TO STIFFEN A COMPONENT MADE OF THERMOSETTING COMPOSITE MATERIAL, AND ASSOCIATED STIFFENING METHOD

(30) Priorité: 17.07.2020 FR 2007520
(43) Date de publication de la demande: 19.04.2023
(73) Titulaire: ArianeGroup SAS, 78130 Les Mureaux (FR)
(72) Inventeur: CAVALIERE, Frederick, 78180 MONTIGNY LE BRETONNEUX (FR); DERICQUEBOURG, Thomas, 75017 PARIS (FR); AUMONT, Fabrice, 78200 MANTES LA JOLIE (FR); AMROUCHE, Laurent, 60590 SERIFONTAINE (FR); DEMEURE, Benjamin, 78540 VERNOUILLET (FR)
(74) Mandataire: Cabinet Beau de Loménie
(86) Numéro de dépôt international: PCT/FR2021/051339
(87) Numéro de publication internationale: WO 2022/013512

(56) Documents cités:
- EP-A1- 2 889 123
- WO-A1-2012/091695
- WO-A2-02/16784
- US-B1- 6 520 706

## Description

### DOMAINE TECHNIQUE

L'invention se rapporte à une pièce structurale raidie, dans laquelle le mode de raidissage est intégré sur au moins l'une des faces de la pièce en matériau composite thermodurcissable.

L'invention peut trouver application pour le raidissage de toutes pièces en matériau composite thermodurcissable devant présenter une grande stabilité dimensionnelle sous sollicitations mécaniques ou thermiques et/ou une grande rigidité. L'invention s'applique ainsi à tous les domaines techniques qui requièrent des pièces de formes complexes ; il peut par exemple s'agir de pièces structurales dans le domaine spatial (par exemple, réflecteur d'antenne de satellite, structure plateforme satellite, distributeur (« dispenser » en anglais, structure qui sert de support de plusieurs satellites en même temps et d'éjection de ces satellites une fois en orbite selon un ordre défini à l'avance), structures inter-étages composites, réservoirs composites, etc.) ou aéronautique (par exemple, panneaux de fuselage, panneaux de voilure, trappes de train d'atterrissage, trappes d'accès, etc.) et peut s'appliquer aux domaines des transports routier, aérien, ferroviaire et maritime.

### ÉTAT DE LA TECHNIQUE ANTÉRIEURE

Certaines pièces de structure (également appelées pièces structurales) nécessitent d'être raidies. Pour illustrer la problématique qui se pose au cours de la réalisation de telles pièces, nous allons décrire le cas particulier de la réalisation d'une pièce structurale de type réflecteur d'antenne de satellite. US 6 520 706 B1 divulgue le préambule de la revendication 1.

Actuellement, les réflecteurs d'antenne de satellite comportent une coque en matériau composite qui est assemblée, après polymérisation, à une structure arrière rigide. La coque présente une forme complexe en double courbure ; la structure arrière, quant à elle, est composée d'un assemblage de tubes, de manchons (permettant une jonction entre les tubes) et de moyens de liaison de type ferrure (permettant une jonction entre la structure arrière et le satellite).

L'assemblage de la structure arrière rigide avec la coque est réalisé par l'intermédiaire de moyens de liaison de type cornière en matériau composite ayant une forme en L. La structure arrière présente une forme différente de la coque et n'est donc pas directement en contact avec la coque lors de l'opération d'assemblage. Une extrémité des cornières est collée à la structure arrière et l'autre extrémité est collée à la coque. L'angle et la largeur des cornières doivent être choisis de manière à permettre un bon contact avec la face arrière de la coque (double courbure). Chaque pièce de liaison de type cornière doit donc être adaptée, notamment à la courbure à l'interface avec la coque, ce qui implique d'avoir à disposition un grand nombre de pièces différentes et beaucoup de temps pour le choix de la pièce adéquate.

En outre, tous les collages sont réalisés manuellement, en utilisant un adhésif en pâte, à température ambiante (on effectue ce que l'on appelle communément un collage à froid).

Au final, ce mode de raidissage et d'assemblage est particulièrement complexe et chronophage, puisqu'il nécessite la fabrication de nombreuses pièces (tubes, manchons, très nombreux types de cornières) et nécessite de nombreuses et minutieuses opérations d'assemblage par collage manuel à température ambiante (assemblage des tubes/manchons pour la réalisation de la structure arrière, et assemblage de la coque/structure à l'aide des cornières), ce qui a un impact sur le coût des pièces structurales raidies ainsi obtenues.

Il y a donc un besoin de simplification des opérations de raidissage de la coque et d'assemblage des différents composants, tout en conservant une grande fiabilité des liaisons collées.

On rappelle que cette problématique a été décrite dans le cas particulier des réflecteurs d'antenne de satellites, mais se pose de manière générale à toute pièce structurale devant être raidie en étant assemblée avec un ensemble de raidisseurs et présentant une interface de collage variable (du fait d'une interface de collage à courbure variable, le plus souvent à double courbure, et qui peut être différente selon les positions d'assemblage).

L'invention a pour objectif de proposer un mode de raidissage qui permette de s'adapter facilement à des formes spécifiques complexes de pièces structurales à raidir, tout en diminuant les coûts de fabrication en diminuant de manière drastique le nombre d'éléments nécessaires au raidissage d'une pièce structurale et en diminuant les différentes opérations de collage de ces éléments sur la pièce.

### EXPOSÉ DE L'INVENTION

La présente invention est définie par les revendications indépendantes 1, 2 et 13.

En outre, la divulgation propose une structure de raidissage destinée à raidir une pièce en matériau composite thermodurcissable en équipant au moins l'une de ses surfaces, la structure de raidissage étant caractérisée en ce qu'elle comprend :
- au moins un corps s'étendant selon une direction longitudinale, chaque corps ayant un premier et un deuxième chant longitudinal opposés, et une première et une deuxième face latérale opposées ;
- au moins une embase dont au moins une embase socle, chaque embase étant munie d'un plateau et d'une première et d'une deuxième languette qui délimitent, avec le plateau, un logement pour au moins un corps, la première et la deuxième languette s'étendant depuis une face principale du plateau et étant respectivement plaquées contre la première et la deuxième face latérale du corps ;

et étant caractérisée en ce que chaque embase dont le plateau est solidaire du premier chant longitudinal d'un corps est une embase socle, le plateau de chaque embase socle étant destiné à être plaqué contre la surface de la pièce à raidir ; et
en ce que chaque corps et chaque embase sont en matériau composite thermodurcissable.

Certains aspects préférés mais non limitatifs de la structure de raidissage sont les suivants :
- chaque corps est orienté orthogonalement par rapport au plateau de chaque embase chapeau ;
- chaque corps peut être du type monolithique (par exemple, une plaque monolithique) ou de type sandwich avec une âme et deux peaux de part et d'autre de l'âme ;
- chaque corps est muni d'au moins une embase chapeau et d'au moins une embase socle, une embase chapeau étant une embase dont le plateau est solidaire du deuxième chant longitudinal d'un corps ;
- lorsque la structure de raidissage comprend plusieurs corps, au moins une embase est disposée à cheval sur au moins deux corps adjacents afin de les solidariser;
- lorsque la structure de raidissage comprend plusieurs corps, chaque corps est relié à au moins un corps adjacent par au moins une embase ;
- le logement de l'embase disposée à cheval sur au moins deux corps adjacents a une forme de croix ; la croix est formée de deux branches qui se coupent à angle plus ou moins ouvert, de préférence à angle droit ;
- l'embase disposée à cheval sur au moins deux corps adjacents est une embase chapeau ;
- le premier chant d'au moins un corps présente une courbure simple ou une double courbure ;
- le deuxième chant d'au moins un corps est rectiligne.

La divulgation concerne également un procédé de raidissage d'une pièce par une structure de raidissage telle que décrite ci-dessus, la pièce étant en un matériau composite dont la résine thermodurcissable est non polymérisée ou partiellement polymérisée, le procédé comprenant les étapes successives suivantes :
a) fourniture du ou des corps en matériau composite thermodurcissable de la structure de raidissage ;
b) pour chaque embase socle de la structure de raidissage, réalisation des opérations successives suivantes :
   - formation d'un plateau non polymérisé par drapage de strates de renfort fibreux pré-imprégné avec une résine thermodurcissable sur la surface de la pièce à raidir ;
   - mise en place d'au moins un corps sur la face principale du plateau non polymérisé, le premier chant longitudinal de chaque corps étant plaqué contre la face principale du plateau ;
   - formation des première et deuxième languettes, respectivement, par drapage de premières strates de renfort fibreux pré-imprégné avec une résine thermodurcissable sur une première partie de la face principale du plateau et remontant sur la première face latérale du corps, et par drapage de deuxièmes strates de renfort fibreux pré-imprégné avec une résine thermodurcissable sur une deuxième partie de la face principale du plateau, différente de la première partie, et remontant sur la deuxième face latérale du corps ;
c) solidarisation de chaque embase socle avec la surface de la pièce à raidir et du ou des corps par polymérisation totale de la résine thermodurcissable du plateau, des première et deuxième languettes et de la pièce.

Selon une variante, pour au moins une embase socle, l'étape b) est remplacée par la réalisation des opérations successives suivantes :
- formation d'un plateau non polymérisé par drapage de strates de renfort fibreux pré-imprégné avec une résine thermodurcissable sur la surface de la pièce à raidir ;
- mise en place d'un outil empreinte sur la face principale du plateau non polymérisé ;
- formation des première et deuxième languettes, respectivement, par drapage de premières strates de renfort fibreux pré-imprégné avec une résine thermodurcissable sur une première partie de la face principale du plateau et remontant sur une première face latérale de l'outil empreinte, et par drapage de deuxièmes strates de renfort fibreux pré-imprégné avec une résine thermodurcissable sur une deuxième partie de la face principale du plateau, différente de la première partie, et remontant sur une deuxième face latérale de l'outil empreinte ;
- polymérisation partielle de la résine thermodurcissable de la pièce, du plateau et des première et deuxième languettes ;
- retrait de l'outil empreinte, moyennant quoi on forme un logement pour au moins un corps ;
- dépôt d'une couche d'adhésif dans le logement sur la face principale du plateau partiellement polymérisé ;
- mise en place d'au moins un corps dans le logement sur la couche d'adhésif, le premier chant longitudinal de chaque corps étant plaqué contre la couche d'adhésif de la face principale du plateau.

Selon une variante qui sera décrite en détails plus bas, il est également possible de réaliser au préalable des embases socles sur un moule, d'effectuer une mi-cuisson des embase socles (cycle de polymérisation partielle), de retirer le moule, puis de placer les embases socles sur une pièce à raidir crue ou mi-cuite, pour enfin réaliser une polymérisation totale (cuisson finale) après positionnement dans les embases socles des corps polymérisés avec ou sans embases chapeau. Selon une autre variante qui sera décrite en détails plus bas, il est également possible de réaliser au préalable des embases socles sur un moule, de placer des corps polymérisés avec ou sans embases chapeau dans ces embases socles, puis d'effectuer une mi-cuisson, retirer le moule, et placer la structure de raidissage ainsi obtenue sur une pièce à raidir crue ou mi-cuite pour enfin réaliser une polymérisation totale.

Selon une variante, lorsque la structure de raidissage comporte au moins une embase chapeau, le procédé comprend en outre, avant l'opération de mise en place d'au moins un corps sur la face principale du plateau non polymérisé, la formation de ladite au moins une embase chapeau avec, pour chaque embase chapeau, la réalisation des opérations successives suivantes :
- formation d'un plateau non polymérisé par drapage de strates de renfort fibreux pré-imprégné avec une résine thermodurcissable sur un moule ;
- polymérisation totale de la résine thermodurcissable du plateau ;
- dépôt d'une première couche d'adhésif sur la face principale du plateau polymérisé ;
- mise en place d'au moins un corps sur la première couche d'adhésif, chaque corps étant positionné sur la face principale du plateau polymérisé, de préférence orthogonalement à ladite face principale, le deuxième chant longitudinal de chaque corps étant plaqué contre la première couche d'adhésif de la face principale du plateau ;
- dépôt d'une deuxième couche d'adhésif sur les première et deuxième faces latérales de chaque corps ;
- formation des première et deuxième languettes, respectivement, par drapage de premières strates de renfort fibreux pré-imprégné avec une résine thermodurcissable sur une première partie de la face principale du plateau recouverte de la première couche d'adhésif et remontant sur la première face latérale du corps recouverte de la deuxième couche d'adhésif, et par drapage de deuxièmes strates de renfort fibreux pré-imprégné avec une résine thermodurcissable sur une deuxième partie de la face principale du plateau recouverte de la première couche d'adhésif, différente de la première partie, et remontant sur la deuxième face latérale du corps recouverte de la deuxième couche d'adhésif ;
- polymérisation totale de l'adhésif des première et deuxième couches et de la résine thermodurcissable des première et deuxième languettes ;
- retrait du moule.

Selon une variante, lorsque la structure de raidissage comporte au moins une embase chapeau, le procédé comprend en outre, avant l'opération de mise en place d'au moins un corps sur la face principale du plateau non polymérisé, la formation de ladite au moins une embase chapeau avec, pour chaque embase chapeau, les opérations successives suivantes :
- formation d'un plateau non polymérisé par drapage de strates de renfort fibreux pré-imprégné avec une résine thermodurcissable sur un moule ;
- polymérisation totale de la résine thermodurcissable du plateau ;
- mise en place d'un outil empreinte sur la face principale du plateau polymérisé ;
- dépôt d'une première couche d'adhésif sur le plateau ;
- formation des première et deuxième languettes, respectivement, par drapage de premières strates de renfort fibreux pré-imprégné avec une résine thermodurcissable sur une première partie de la face principale du plateau recouverte de la première couche d'adhésif et remontant sur une première face latérale de l'outil empreinte, et par drapage de deuxièmes strates de renfort fibreux pré-imprégné avec une résine thermodurcissable sur une deuxième partie de la face principale du plateau recouverte de la première couche d'adhésif, différente de la première partie, et remontant sur une deuxième face latérale de l'outil empreinte ;
- polymérisation partielle de la résine thermodurcissable des première et deuxième languettes et de l'adhésif de la première couche ;
- retrait de l'outil empreinte, moyennant quoi on forme un logement pour au moins un corps ;
- dépôt d'une deuxième couche d'adhésif dans le logement sur la face principale du plateau polymérisé ;
- dépôt d'une troisième couche d'adhésif sur les première et deuxième faces latérales de chaque corps ;
- mise en place, dans chaque logement, d'au moins un corps sur la deuxième couche d'adhésif, chaque corps étant positionné sur la face principale du plateau polymérisé, de préférence orthogonalement à ladite face principale, le deuxième chant longitudinal de chaque corps étant plaqué contre la deuxième couche d'adhésif de la face principale du plateau ;
- polymérisation totale de l'adhésif des première, deuxième et troisième couches et de la résine thermodurcissable des première et deuxième languettes de chaque embase chapeau.

L'utilisation d'un outil empreinte permet de former un logement dans une embase pour au moins un corps, l'outil empreinte étant destiné à être retiré après polymérisation partielle des première et deuxième languettes de l'embase.

Avantageusement, lorsque la structure de raidissage comporte plusieurs corps, au moins deux corps sont disposés adjacents et sont reliés par au moins une embase, de préférence une embase chapeau.

Selon une variante, pour au moins une embase, les premières et secondes strates de renfort fibreux destinées à former les première et deuxième languettes sont un même ensemble de strates qui recouvre également la face du plateau qui est opposée à la face principale.

La divulgation concerne enfin une pièce raidie obtenue par mise en œuvre du procédé de raidissage tel que décrit ci-dessus ; de préférence, la pièce à raidir est un réflecteur d'antenne de satellite. La structure de raidissage selon l'invention peut donc être intégrée sur une face d'une pièce à raidir, par exemple la face arrière d'une coque de réflecteur d'antenne, même si cette pièce présente une forme spécifique, par exemple une forme en double courbure.

La divulgation présente de nombreux avantages. La structure de raidissage et le procédé de raidissage permettent de s'adapter facilement à des formes spécifiques complexes de la surface de la pièce à raidir (la pièce peut par exemple avoir une double courbure), de diminuer les coûts de fabrication (notamment par une diminution drastique du nombre d'éléments nécessaires au raidissage, une simplification de leur positionnement sur la pièce à raidir et une diminution des différentes opérations de collage de la structure de raidissage par rapport à l'art antérieur). Enfin, la divulgation permet d'assurer une bonne tenue mécanique et une grande fiabilité des liaisons collées.

### BRÈVE DESCRIPTION DES DESSINS

La présente invention sera mieux comprise à la lecture de la description qui va suivre, donnée à titre purement indicatif et nullement limitatif, en faisant référence aux dessins annexés sur lesquels :
- la figure 1 représente une plaque de type sandwich dans laquelle sont découpés les corps d'une structure de raidissage, réalisée selon un premier mode de réalisation de l'invention ;
- la figure 2 représente l'un des corps de la figure 1, après découpe par usinage dans la plaque de type sandwich ;
- la figure 3 représente une embase selon l'invention, qui peut être une embase chapeau ou une embase socle ;
- la figure 4a représente un exemple d'embase, selon une vue en coupe, réalisée selon un mode de réalisation ;
- la figure 4b représente un autre exemple d'embase, selon une vue en coupe, réalisée selon un autre mode de réalisation ;
- la figure 4c représente un autre exemple d'embase, selon une vue en coupe, réalisée selon un autre mode de réalisation ;
- la figure 4d représente un autre exemple d'embase, selon une vue en coupe, réalisée selon un autre mode de réalisation ;
- la figure 5a représente, selon une vue en coupe, un mode de formation d'une embase à l'aide d'un outil empreinte et dont les première et deuxième languettes sont partiellement polymérisées ;
- la figure 5b représente, selon une vue en coupe, une étape d'un mode d'assemblage d'un corps avec l'embase de la figure 5a ;
- la figure 5c représente, selon une vue en coupe, une autre étape d'un mode d'assemblage d'un corps avec l'embase de la figure 5a ;
- la figure 6 représente un exemple de réalisation intermédiaire d'une structure de raidissage selon l'invention, comprenant un corps avec un premier chant courbe et un deuxième chant rectiligne, et une embase chapeau ; la réalisation est dite « intermédiaire » car, pour être complète, la structure de raidissage doit être assemblée dans un deuxième temps à une embase socle (qui n'est donc pas encore représentée) ;
- la figure 7 représente un autre exemple de réalisation intermédiaire d'une structure de raidissage selon l'invention, comprenant deux embases chapeaux (l'embase socle n'étant pas représentée, car pas encore assemblée) ;
- la figure 8 représente un autre exemple de réalisation intermédiaire d'une structure de raidissage selon l'invention, dans laquelle l'embase chapeau présente une largeur de plateau variable et une hauteur de languettes également variable ;
- la figure 9 représente un autre exemple de réalisation intermédiaire d'une structure de raidissage selon l'invention, comportant plusieurs corps reliés par une seule et même embase chapeau, qui forme un logement en forme de croix permettant de loger l'ensemble des corps ;
- la figure 10 représente un autre exemple de réalisation intermédiaire d'une structure de raidissage selon l'invention, comportant plusieurs corps reliés par une seule et même embase chapeau, qui forme un logement en forme de croix permettant de loger une portion de chacun des corps et de les solidariser, et d'autres embases chapeau permettant chacune de loger une autre portion d'un corps ;
- la figure 11 représente un exemple d'une pièce devant être raidie, sur laquelle est représentée une seule embase socle selon l'invention. Cette embase socle suit la forme de la surface de la pièce à raidir et possède un logement destiné à accueillir un corps ou plusieurs corps disposés longitudinalement ;
- la figure 12 représente un exemple d'une pièce devant être raidie, comportant une seule embase socle selon l'invention, suivant la forme de la pièce à raidir et ayant un logement destiné à accueillir plusieurs corps adjacents ;
- la figure 13 représente la pièce à raidir de la figure 12, qui, après assemblage des corps et de l'embase chapeau, devient une pièce raidie ;
- la figure 14 représente, selon une vue en coupe, un mode de réalisation d'une structure de raidissage selon l'invention ;
- la figure 15 représente, selon une vue en coupe, un autre mode de réalisation d'une structure de raidissage selon l'invention.

On précise que les différents éléments ne sont pas représentés à l'échelle.

### EXPOSÉ DÉTAILLÉ DE MODES DE RÉALISATION PARTICULIERS

Comme nous venons de le voir, une structure de raidissage selon l'invention comporte au moins un corps et au moins une embase ; s'il y a une seule embase, il s'agira d'une embase socle. La structure de raidissage peut également comporter une ou plusieurs embases chapeaux.

Dans la structure de raidissage selon l'invention, chaque corps a pour fonction de rigidifier la structure finale suivant une direction déterminée. Chaque corps peut être du type monolithique, par exemple une plaque monolithique, ou bien être de type sandwich, c'est-à-dire un stratifié comprenant une âme et deux peaux situées de part et d'autre de l'âme, ce qui permet d'obtenir un élément ayant une grande rigidité, pour une masse globale faible.

Chaque embase socle a pour fonction, d'une part, de permettre l'assemblage entre le corps et la pièce à raidir et, d'autre part, d'assurer une grande fiabilité et une bonne tenue mécanique de la liaison collée.

Chaque embase chapeau a pour fonction d'augmenter l'inertie de la structure de raidissage pour un encombrement minimal.

Chaque embase, qu'elle soit embase socle ou embase chapeau, est destinée à être positionnée sur et assemblée avec un ou plusieurs corps ; elle comporte un plateau et deux languettes formant, selon une vue en coupe, une section droite en forme sensiblement de « π », le plateau formant la tête et les languettes formant les pieds du « π ».

Dans la structure de raidissage selon l'invention, le ou les corps, le ou les embases socles et le ou les éventuelles embases chapeaux sont en matériau composite du type à renfort fibreux imprégné par une matrice thermodurcissable. Il en est de même pour la pièce à raidir. C'est notamment ce qui va permettre de faciliter l'assemblage de ces différents éléments par co-cuisson (ou « co-curing » en anglais) ou par co-collage (ou « co-bonding » en anglais), comme nous le verrons plus loin.

Le renfort fibreux peut être en fibres de carbone et/ou de verre et/ou de fibres de Kevlar^{™} ; il peut aussi s'agir d'une combinaison de plusieurs types de fibres, par exemple un mélange de fibres verre/carbone, ou de fibres carbone/Kevlar^{™}

La matrice est un liant en résine qui imprègne le renfort et se solidifie lorsqu'elle est polymérisée. Dans l'invention, la matrice est une résine thermodurcissable. Le monomère de base de la résine époxy peut par exemple être de type DGEBA (DiGlycidyl Éther de Bisphénol A), TGPAP (TriGlycidyl ParaAminoPhénol) ou TGMDA (TétraGlycidyl Méthylène DiAniline). Le durcisseur peut être de type amine, par exemple du DDS (DiaminoDiphényl Sulfone).

Pour le renfort fibreux, on peut utiliser des tissus ou nappes et les empiler pour former des strates. On peut utiliser un renfort fibreux pré-imprégné de résine thermodurcissable (également appelé « prepreg » en anglais) ou imprégner avec la résine un renfort fibreux. Le renfort fibreux imprégné de résine peut éventuellement être compacté avant de subir une polymérisation.

De manière générale, dans le cadre de la présente invention, l'assemblage de deux éléments (qu'il s'agisse par exemple d'une embase socle avec la pièce à raidir ou des languettes avec le corps d'une embase) correspond soit à un collage par« co-curing », lorsque les deux éléments assemblés sont non polymérisés ou partiellement polymérisés et sont amenés à un état de polymérisation complète lors du même cycle de chauffage, soit à un collage par « co-bonding », lorsque l'un des deux éléments est déjà complétement polymérisé, avec la nécessité de réaliser une préparation de surface de l'élément polymérisé et de disposer à l'interface des deux éléments une couche d'adhésif en résine thermodurcissable. En d'autres termes, dès lors qu'un élément est totalement polymérisé, il est nécessaire, pour qu'il soit assemblé à un autre élément, qu'on dépose une couche d'adhésif à l'interface de collage. On fera généralement une préparation de l'interface de collage par exemple par ponçage et nettoyage avec un solvant, pour ensuite déposer un film d'adhésif. Dans le cas d'un collage par « co-bonding », il y a deux cycles de chauffage, un premier cycle au cours duquel l'un des deux éléments est complétement polymérisé et un second cycle au cours duquel le deuxième élément, ainsi que l'adhésif, sont complétement polymérisés. Au final, que ce soit par collage par « co-curing » ou par « co-bonding », on obtient une liaison entre les deux éléments par collage à chaud qui présente une grande fiabilité et une très bonne tenue mécanique.

Ainsi, selon un premier exemple, la pièce à raidir peut être dans un état partiellement polymérisé et le ou les plateaux des embases socles de la structure de raidissage (si les plateaux sont destinés à être en contact de la pièce) être également dans un état partiellement polymérisé ; dans ce cas, la liaison obtenue après polymérisation s'apparente à du « co-curing ».

Selon un autre exemple, la pièce à raidir peut être complètement polymérisée avant la pose de la structure de raidissage ; dans ce cas, il sera nécessaire de déposer une couche d'adhésif afin d'obtenir une liaison par « co-bonding ».

Dans le cadre de la présente invention, le taux de polymérisation d'une polymérisation partielle est compris entre 18% et 75% (bornes incluses), et de manière préférentielle entre 20% et 50%. Ce taux de polymérisation est déterminé par analyse DSC (pour « Differential Scanning Calorimetry » en anglais) suivant la norme ISO 14322:2018.

De manière connue, la polymérisation est obtenue en appliquant un traitement thermique. Pour les résines utilisées, la température de polymérisation est généralement comprise entre 120°C et 220°C, avec un palier à température de polymérisation compris entre 1h et 2h. Dans le cas des réflecteurs d'antenne satellite, on utilise majoritairement des résines époxy avec une polymérisation à 180°C pendant 2h.

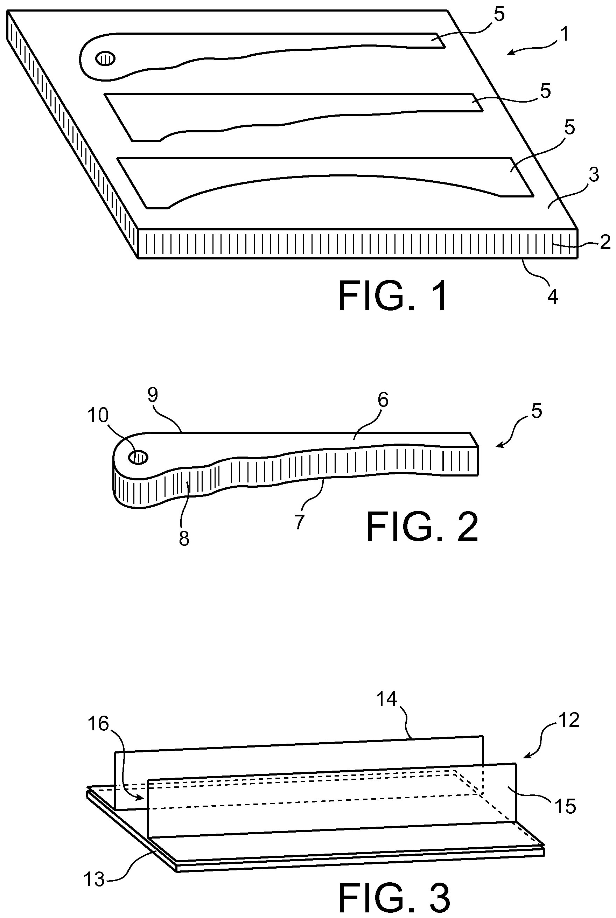

En référence à la figure 1, il est représenté un panneau 1 de type sandwich, qui comporte une âme 2, une peau supérieure 3 et une peau inférieure 4, les deux peaux étant situées de part et d'autre de l'âme et collées à celle-ci. L'âme peut par exemple être une plaque de mousse ou une structure en nid-d'abeilles. Les deux peaux 3, 4 sont réalisées en un matériau composite à renfort fibreux et matrice thermodurcissable, par exemple carbone/époxy. Dans ce panneau sandwich, on procède ensuite à des découpes pour obtenir les corps 5 ; dans la figure 1, trois corps 5 de formes différentes ont été découpés dans le panneau 1. La découpe peut être réalisée par usinage des contours de chacun des corps 5. Dans l'exemple illustré, le panneau 1 étant de forme sensiblement plane, les corps 5 présentent deux faces latérales 6, 7 opposées sensiblement parallèles et la découpe correspond aux chants des corps ; les corps 5 présentent un premier chant longitudinal 8 courbe et un deuxième chant longitudinal 9 rectiligne, chaque chant longitudinal reliant la première et la deuxième face latérale entre elles.

Le premier chant longitudinal de chaque corps est destiné à venir être plaqué contre le plateau d'une embase socle, qui lui-même est destiné à être plaqué contre une surface d'une pièce à raidir. Généralement, la surface de la pièce à raidir est courbe et le premier chant est donc courbe, sa courbure étant adaptée à la courbure de la surface à l'endroit où l'on souhaite installer la structure de raidissage.

De préférence, le deuxième chant longitudinal de chaque corps est, quant à lui, rectiligne. En effet, l'embase chapeau n'ayant pas pour fonction d'être assemblée à la surface de la pièce à raidir, on préférera l'associer à un chant rectiligne d'un corps, afin de faciliter l'assemblage avec ce corps et ce d'autant plus lorsqu'on assemble plusieurs corps ensemble. Cependant, pour des considérations d'encombrement ou de masse, un deuxième chant courbe est envisageable. Dans ce cas, si on assemble une embase chapeau, celle-ci devra suivre cette courbure.

Outre la découpe des premier et deuxième chants, on peut donner aux corps des extrémités de formes différentes, qui sont adaptées selon que l'on souhaite assembler plusieurs corps entre eux, assembler un ou plusieurs d'entre eux avec des ferrures, etc. Par exemple, le corps représenté dans la figure 2 comporte un trou 10 dans l'une de ses extrémités, ce trou étant destiné à accueillir, par exemple, une ferrure.

Une embase, qu'il s'agisse d'une embase socle 11 ou d'une embase chapeau 12, comporte un plateau 13, ainsi qu'une première 14 et une deuxième 15 languette, qui délimite, avec le plateau 13, un logement 16 pour accueillir un ou plusieurs corps 5. À la figure 3 est représentée une embase chapeau 12.

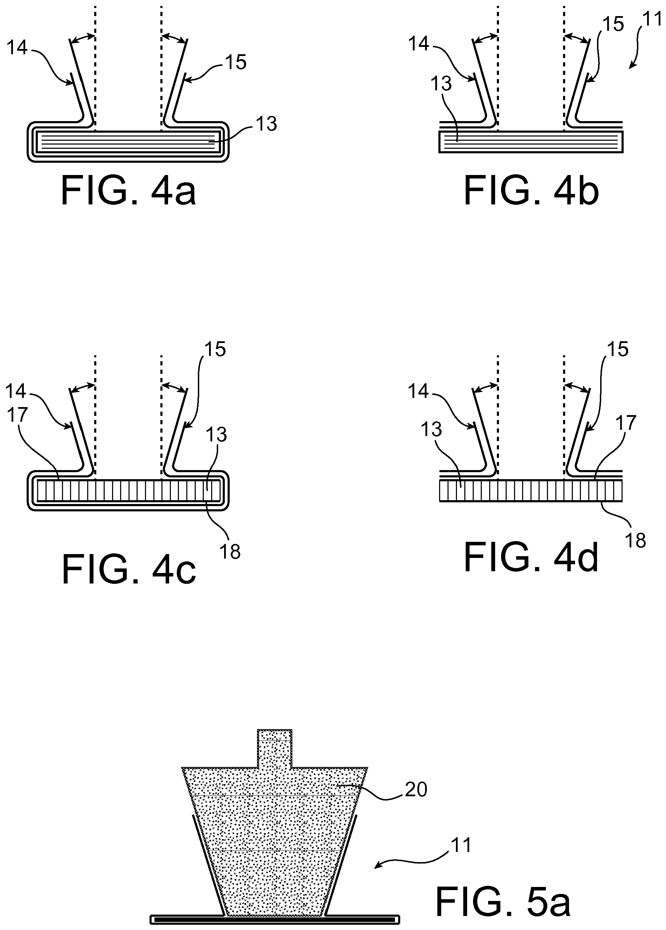

En référence aux figures 4a-4d, chaque embase, qu'il s'agisse d'une embase socle et d'une embase chapeau, définit une section droite sensiblement en forme de « π » (le « π » étant ici représenté la tête en bas), le plateau formant le haut du « π » et les première et deuxième languettes les pieds du « π ».

Le plateau 13 de l'embase chapeau peut être de type monolithique, obtenu par exemple par drapage de strates de renfort fibreux pré-imprégné avec une résine thermodurcissable (figures 4a et 4b), ou bien être de type sandwich avec une âme et deux peaux collées de part et d'autre de l'âme (figures 4c et 4d).

Dans le cas d'une embase chapeau, la résine thermodurcissable du plateau est, de préférence, complétement polymérisée avant la formation des languettes, ce qui permet au plateau de conserver sa forme lors de la polymérisation des languettes.

Au contraire, dans le cas d'une embase socle, le plateau ne peut être que monolithique. La résine thermodurcissable du plateau est, dans un premier temps, non polymérisée ou partiellement polymérisée pendant la formation de l'embase socle ; puis, dans un deuxième temps, lorsqu'on assemble l'embase socle avec la pièce à raidir, on procède à la polymérisation complète de la résine thermodurcissable du plateau de l'embase socle, de sorte que la liaison entre la pièce et l'embase socle soit optimale.

Les première et deuxième languettes 14 et 15 de chaque embase sont formées par drapage, respectivement, de premières et deuxièmes strates de renfort fibreux pré-imprégné avec une résine thermodurcissable ; elles peuvent être drapées localement sur la face principale 17 du plateau et remonter sur les faces latérales du corps (figures 4b et 4d) ou bien, dans le cas particulier d'une embase chapeau, être drapées autour du plateau (en englobant la face opposée 18 à la face principale 17) (figures 4a et 4c). Dans ce cas, les premières et deuxièmes strates de renfort fibreux pré-imprégné avec une résine thermodurcissable forment un seul et même ensemble de strates de renfort fibreux pré-imprégné avec une résine thermodurcissable.

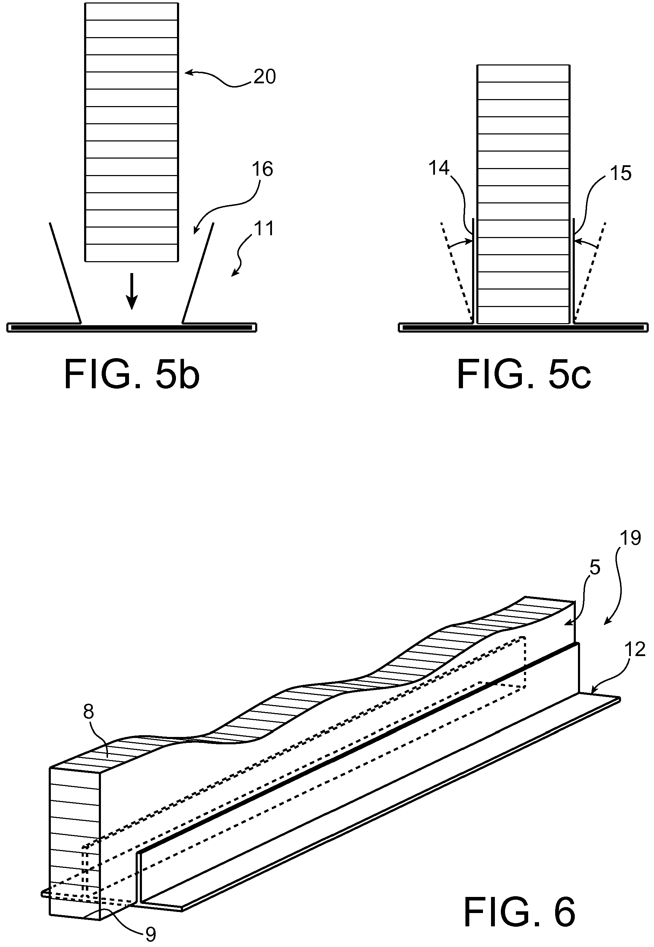

Une embase, que ce soit une embase socle 11 ou une embase chapeau 12, peut être réalisée directement sur le ou les corps 5 auxquels elle doit être assemblée ou bien être réalisée séparément sur un outil empreinte 20 (figure 5a), pour être ensuite détachée de cet outil empreinte et être assemblée au(x) corps 5 (figures 5b et 5c).

Si les languettes 14, 15 de l'embase sont réalisées sur un outil empreinte 20, les première et deuxième languettes peuvent être disposées sur le plateau 13 et plaquées contre l'outil empreinte, ayant la forme du corps destiné à être assemblé avec l'embase, puis les languettes sont polymérisées partiellement (figure 5a). On retire ensuite l'outil empreinte, on place le corps dans le logement de l'embase (figure 5b) et on procède à la polymérisation complète de la résine des languettes. Pendant la polymérisation complète, la résine ramollit et les première et deuxième languettes viennent se conformer (se plaquer) sur les faces latérales du corps. Elles se rabattent respectivement sur les première et deuxième faces latérales 6, 7 du corps, de manière à recouvrir au moins partiellement ces deux faces (figure 5c).

De manière avantageuse, lorsqu'on utilise un outil empreinte 20 pour former les languettes de l'embase (qu'elle soit socle ou chapeau), cet outil empreinte est dimensionné de telle sorte que les languettes formant les pieds du « π » de l'embase soient écartées d'un angle plus important que celui qu'elles auraient en étant plaquées contre le corps. Ainsi, si le corps a des faces latérales parallèles, on fait en sorte que les languettes ne soient pas parallèles et forment un angle α légèrement ouvert par rapport à la perpendiculaire au plan du plateau (par exemple, un angle ouvert de 10 à 15°) (figures 4a-4d). Cela permet de faciliter l'insertion ultérieure du corps dans le logement (figures 5a à 5c. De préférence, l'outil empreinte est en élastomère, ce qui permet à l'outil empreinte de bien s'adapter à la courbure de la surface du plateau et facilite son extraction du logement de l'embase après polymérisation partielle.

Plusieurs exemples d'une structure de raidissage 19 sont représentés dans les figures 6 à 10. Le corps 5 comporte un premier chant 8 courbe, un deuxième chant 9 rectiligne, le deuxième chant étant plaqué contre le plateau 13 d'une ou plusieurs embases chapeaux 12. Dans les figures 6 à 10, l'embase socle n'a pas été représentée par souci de simplification. Il est à noter que ce qui est dit pour une embase chapeau est également valable pour une embase socle.

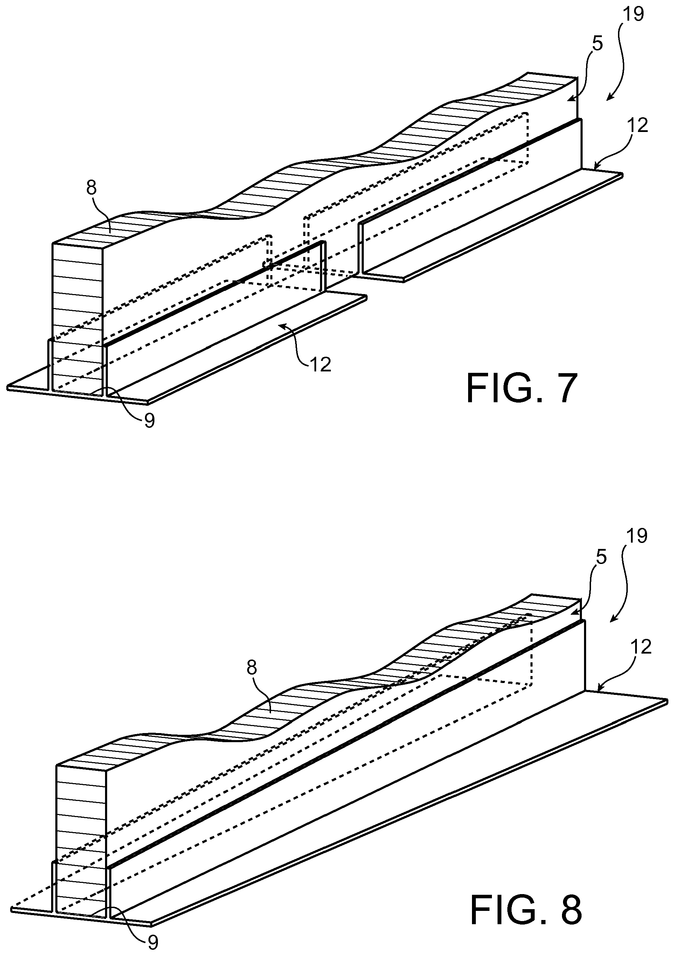

La structure de raidissage 19 peut comporter une seule embase chapeau 12 (figure 6) ou plusieurs embases chapeaux 12 adjacentes (figure 7) pour un même corps 5. Les embases chapeaux peuvent être jointives ou non (avec ou sans recouvrement entre les embases adjacentes). De même, la structure de raidissage peut comporter une seule ou plusieurs embases socles, jointives ou non.

Une embase chapeau ou une embase socle peut avoir des première 14 et deuxième 15 languettes de hauteurs variables, et/ou un plateau 13 de largeur variable, comme illustré dans la figure 8.

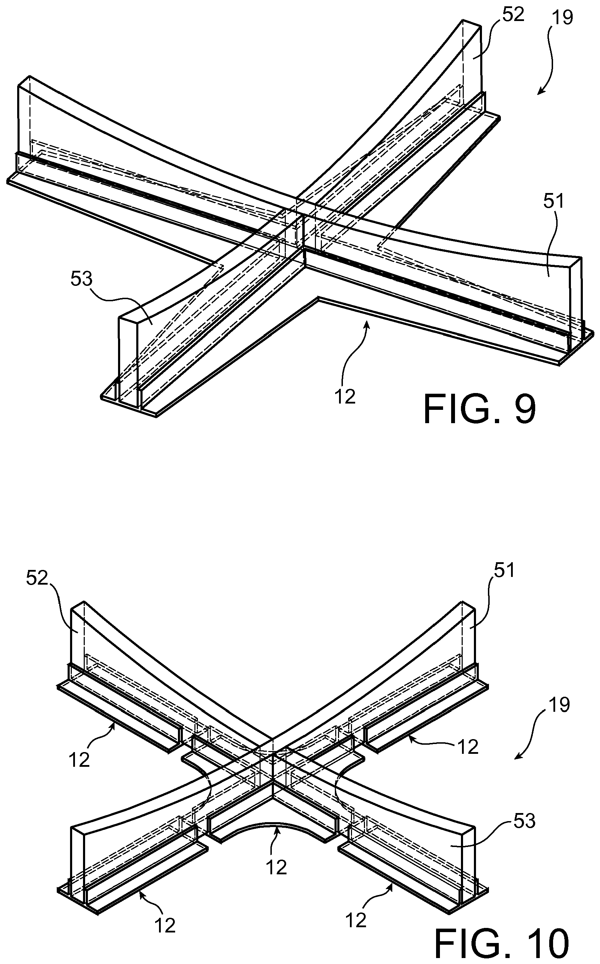

La structure de raidissage peut comporter plusieurs corps 5, qui sont alors rendus solidaires par une ou plusieurs embases disposées à cheval sur ces corps. Dans la figure 9 est représenté un exemple de trois corps 51, 52, 53 reliés par une unique embase chapeau 12 ; ici, l'embase chapeau présente un logement 16 en forme de croix avec ses deux branches à angles droits, un des trois corps (corps 51) étant disposé dans l'une des branches et les deux autres corps 52, 53 dans chacune des moitiés de l'autre branche. Le fait d'utiliser une même embase chapeau pour relier plusieurs corps permet de constituer de manière simple un réseau de corps, préalablement à l'assemblage avec la pièce à raidir. Le fait d'avoir un réseau de corps permet de faciliter et d'assurer un positionnement précis de ces corps sur la pièce.

Dans la figure 10 est représenté un autre exemple où les trois corps 51, 52, 53 sont ici reliés par une embase chapeau centrale, chacun des corps comportant en outre au moins une autre embase chapeau. Les embases chapeaux peuvent être jointives ou non (comme c'est le cas ici).

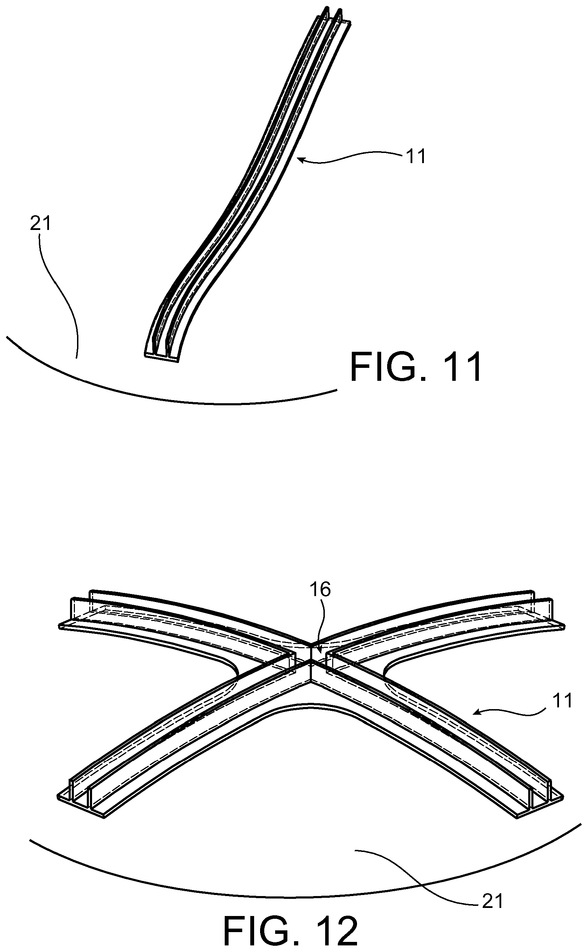

Dans la figure 11 est représentée une embase socle 11 solidaire d'un support 21. Le support peut être la pièce à raidir, si l'embase socle est réalisée directement sur la pièce, ou bien un moule (qui sert de support temporaire de fabrication), destiné à être retiré une fois l'embase socle réalisée. Ce moule présente la même surface que la pièce devant être raidie. Ici, l'embase socle est représentée sans le corps, mais on peut constater que l'embase socle est destinée à recevoir un corps ayant un premier chant courbe. Si on utilise un moule (par exemple le moule de la pièce à raidir, si la pièce est destinée à être obtenue par drapage sur un moule), il devra correspondre à la forme de la pièce à raidir, et l'embase socle devra être positionnée en prenant en compte la contrainte de positionnement du ou des corps de la structure de raidissage sur la pièce.

Dans la figure 12 est représentée une embase socle 11 délimitant un logement 16 en forme de croix, apte à accueillir plusieurs corps. Comme dans la figure 11, l'embase socle est solidaire d'un support 21, qui peut être la pièce à raidir ou un moule servant de support temporaire de fabrication. Cette embase socle en forme de croix peut être partiellement polymérisée.

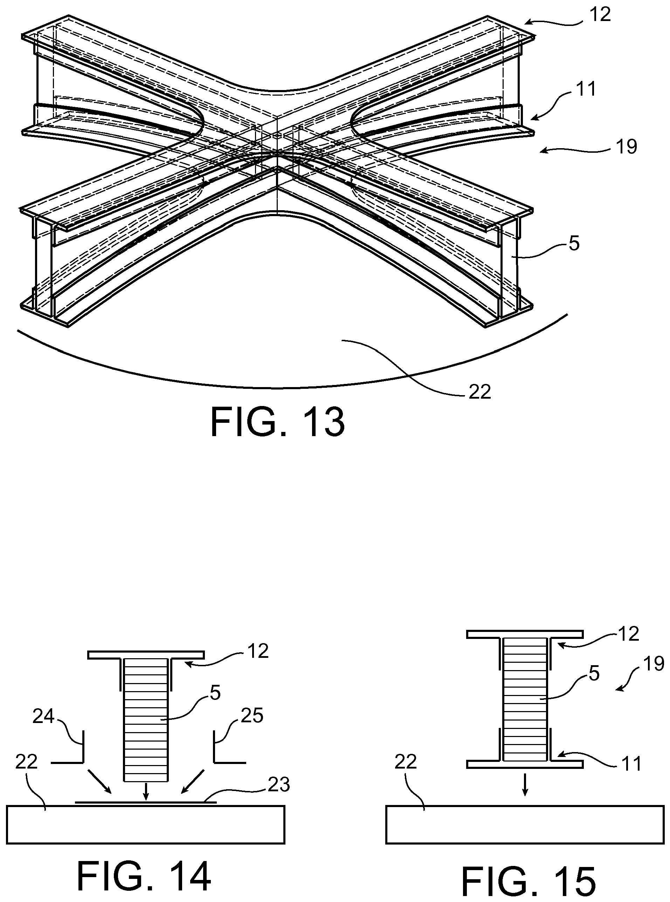

Dans la figure 13 est représenté l'exemple d'une structure de raidissage 19 qui comporte plusieurs corps 5, reliés ensemble par une seule et même embase chapeau 12 et une seule et même embase socle 11, et qui forme un réseau de corps solidaires les uns avec les autres ; la structure de raidissage 19 est fixée à la pièce à raidir 22 lors d'une étape de polymérisation finale.

On peut voir ici que le premier chant de chacun des corps est courbe pour être adapté à la forme courbe de la pièce à raidir, à l'endroit où le corps est destiné à être positionné ; le deuxième chant de chacun des corps est quant à lui rectiligne, ce qui facilite la formation du réseau de corps solidaires.

Par souci de simplification, seul un raidissage radial a été représenté (par exemple, un raidissage radial simple dans la figure 11 et un raidissage radial en forme de croix dans la figure 12). Mais le procédé selon l'invention permet de réaliser tout type de raidissage par assemblage d'au moins un corps sur la surface de la pièce à raidir par l'intermédiaire d'au moins une embase socle. Il peut s'agir d'un raidissage radial, d'un raidissage circonférentiel, d'une combinaison d'un raidissage radial et d'un raidissage circonférentiel, etc. De préférence, la structure de raidissage comporte plusieurs corps formant un réseau.

Le ou les corps 5, 51, 52, 53 de la structure de raidissage 19 peuvent être de grandes dimensions et traverser toute la longueur (ou diamètre) de la pièce à raidir 22 ; ils peuvent au contraire être de plus petites dimensions, de manière à raidir localement la pièce ; ils peuvent également se prolonger en dehors de la surface de la pièce à raidir.

Le mode de réalisation de la structure de raidissage 19 selon l'invention rend possible de nombreux modes d'assemblages différents avec la pièce à raidir 22.

Selon un premier exemple, si la structure de raidissage comporte une embase socle dont le plateau est partiellement polymérisé et que la pièce à raidir est non polymérisée, il suffit pour les assembler de positionner de manière précise la structure de raidissage directement sur la surface de la pièce à raidir, le plateau de l'embase socle faisant face à la surface de la pièce à raidir non polymérisée (la liaison étant destinée à se faire entre le plateau de l'embase socle et la pièce à raidir). On procède ensuite à la polymérisation finale de l'ensemble ainsi formé. Lors de la polymérisation finale, la résine partiellement polymérisée du plateau de l'embase socle va ramollir (diminution de la viscosité), permettant une parfaite conformation du plateau avec la surface de la pièce à raidir. On obtient ainsi une jonction embase socle/pièce sans contrainte par collage à chaud s'apparentant à du « co-curing ». Lors de la polymérisation finale, il y création de liaisons entre les chaînes polymères de la résine du plateau de l'embase socle avec les chaînes polymères de la résine de la pièce à raidir. Ainsi, il n'est pas nécessaire de réaliser une préparation de surface avant l'assemblage, ni de positionner un film adhésif à l'interface embase socle/pièce à raidir.

Pour obtenir un positionnement précis de la structure de raidissage sur la pièce à raidir, ou bien des différents éléments constituant la structure de raidissage lors de sa fabrication, on peut utiliser une projection laser du contour de l'emplacement où doit être positionnée la structure de raidissage.

Selon un autre exemple, on peut avoir, d'une part, un réseau d'au moins deux corps solidarisés par au moins une embase chapeau, les languettes de l'embase chapeau étant dans un état partiellement polymérisé, et, d'autre part, des embases socles réalisées sur la surface de la pièce à raidir et ayant un logement destiné à recevoir le réseau de corps et qui est obtenu à l'aide d'un outil empreinte, les languettes et le plateau des embases socles étant eux aussi dans un état partiellement polymérisé. L'assemblage du réseau de corps avec les embases socles sur la pièce à raidir est réalisé en procédant à un positionnement précis du réseau de corps dans le logement dédié, puis à une polymérisation totale de l'ensemble. Lors de la polymérisation totale, la résine partiellement polymérisée des languettes des embases socles va ramollir, permettant une parfaite conformation entre, d'une part, le plateau de chaque embase socle avec la surface de la pièce à raidir (on obtient une jonction embase socle/pièce à raidir sans contrainte par un collage à chaud s'apparentant à du co-curing) et, d'autre part, les languettes des embases socles avec les peaux des corps du réseau (on obtient une jonction embase socle/corps sans contrainte par un collage à chaud s'apparentant à du co-bonding).

Selon un autre exemple représenté dans la figure 14, on peut former le plateau d'une embase socle 11 en effectuant un drapage 23 de plis ou de nappes préimprégnés de résine thermodurcissable sur la pièce à raidir 22, y placer un corps 5 muni ici d'une embase chapeau 12 et utiliser le corps 5 pour draper directement des plis préimprégnés 24, 25 (destinés à former les première 14 et deuxième 15 languettes de l'embase socle) sur les plis 23 non polymérisés (destinés à former le plateau 13 de l'embase socle) ; l'assemblage des différents éléments est obtenu en réalisant une polymérisation complète de la résine de la pièce 22 à raidir, de la résine des plis 23 du plateau de l'embase socle, de la résine des plis 24, 25 des languettes de l'embase socle et de la résine du corps 5.

Selon un autre exemple représenté dans la figure 15, on réalise une structure de raidissage comportant ici un corps 5 et une embase chapeau 12, ainsi qu'une embase socle 11 dont la résine du plateau 13 et des languettes 14 et 15 est partiellement polymérisée ; on place cette structure de raidissage 19 sur la pièce 22 à raidir et l'assemblage est obtenu en réalisant une polymérisation complète de la résine de la pièce 22 à raidir et de la résine du plateau 13 et des languettes 14 et 15 de l'embase socle.

## Revendications

1. Procédé de raidissage d'une pièce (22) par une structure de raidissage (19), la pièce étant en un matériau composite dont la résine thermodurcissable est non polymérisée ou partiellement polymérisée, et la structure de raidissage (19) équipant au moins l'une des surfaces de la pièce, la structure de raidissage comprenant :
- au moins un corps (5) s'étendant selon une direction longitudinale, chaque corps ayant un premier (8) et un deuxième (9) chant longitudinal opposés, et une première (6) et une deuxième (7) face latérale opposées ;
- au moins une embase (11; 12) dont au moins une embase socle (11), chaque embase (11 ; 12) étant munie d'un plateau (13) et d'une première (14) et d'une deuxième (15) languette qui délimitent, avec le plateau, un logement (16) pour au moins un corps, la première et la deuxième languette s'étendant depuis une face principale (17) du plateau et étant respectivement plaquées contre la première et la deuxième face latérale du corps ;
chaque embase dont le plateau est solidaire du premier chant (8) longitudinal d'un corps étant une embase socle (11), et le plateau de chaque embase socle étant destiné à être plaqué contre la surface de la pièce à raidir ; et
chaque corps et chaque embase étant en matériau composite thermodurcissable
le procédé étant **caractérisé par**
les étapes successives suivantes :
a) fourniture du ou des corps (5) en matériau composite thermodurcissable de la structure de raidissage ;
b) pour chaque embase socle (11) de la structure de raidissage, réalisation des opérations successives suivantes :
- formation d'un plateau (3) non polymérisé par drapage de strates de renfort fibreux pré-imprégné avec une résine thermodurcissable sur la surface de la pièce à raidir ;
- mise en place d'au moins un corps (5) sur la face principale (17) du plateau non polymérisé, le premier chant (8) longitudinal de chaque corps étant plaqué contre la face principale du plateau ;
- formation des première (14) et deuxième (15) languettes, respectivement, par drapage de premières strates de renfort fibreux pré-imprégné avec une résine thermodurcissable sur une première partie de la face principale (17) du plateau et remontant sur la première face latérale (6) du corps, et par drapage de deuxièmes strates de renfort fibreux pré-imprégné avec une résine thermodurcissable sur une deuxième partie de la face principale (17) du plateau, différente de la première partie, et remontant sur la deuxième face latérale (7) du corps ;
c) solidarisation de chaque embase socle (11) avec la surface de la pièce à raidir et du ou des corps par polymérisation totale de la résine thermodurcissable du plateau, des première et deuxième languettes et de la pièce.

2. Procédé de raidissage d'une pièce (22) par une structure de raidissage (19), la pièce étant en un matériau composite dont la résine thermodurcissable est non polymérisée ou partiellement polymérisée, et la structure de raidissage (19) équipant au moins l'une des surfaces de la pièce, la structure de raidissage comprenant :
- au moins un corps (5) s'étendant selon une direction longitudinale, chaque corps ayant un premier (8) et un deuxième (9) chant longitudinal opposés, et une première (6) et une deuxième (7) face latérale opposées ;
- au moins une embase (11; 12) dont au moins une embase socle (11), chaque embase (11 ; 12) étant munie d'un plateau (13) et d'une première (14) et d'une deuxième (15) languette qui délimitent, avec le plateau, un logement (16) pour au moins un corps, la première et la deuxième languette s'étendant depuis une face principale (17) du plateau et étant respectivement plaquées contre la première et la deuxième face latérale du corps ;
chaque embase dont le plateau est solidaire du premier chant (8) longitudinal d'un corps étant une embase socle (11), et le plateau de chaque embase socle étant destiné à être plaqué contre la surface de la pièce à raidir ; et
chaque corps et chaque embase étant en matériau composite thermodurcissable ;
le procédé étant **caractérisé par** les étapes successives suivantes :
a) fourniture du ou des corps (5) en matériau composite thermodurcissable de la structure de raidissage ;
b) pour au moins une embase socle (11) de la structure de raidissage, réalisation des opérations successives suivantes :
- formation d'un plateau non polymérisé par drapage de strates de renfort fibreux pré-imprégné avec une résine thermodurcissable sur la surface de la pièce à raidir ;
- mise en place d'un outil empreinte (20) sur la face principale (17) du plateau non polymérisé ;
- formation des première et deuxième languettes, respectivement, par drapage de premières strates de renfort fibreux pré-imprégné avec une résine thermodurcissable sur une première partie de la face principale (17) du plateau et remontant sur une première face latérale de l'outil empreinte, et par drapage de deuxièmes strates de renfort fibreux pré-imprégné avec une résine thermodurcissable sur une deuxième partie de la face principale du plateau, différente de la première partie, et remontant sur une deuxième face latérale de l'outil empreinte ;
- polymérisation partielle de la résine thermodurcissable de la pièce, du plateau et des première et deuxième languettes ;
- retrait de l'outil empreinte (20), moyennant quoi on forme un logement (16) pour au moins un corps ;
- dépôt d'une couche d'adhésif dans le logement sur la face principale du plateau partiellement polymérisé ;
- mise en place d'au moins un corps dans le logement sur la couche d'adhésif, le premier chant longitudinal de chaque corps étant plaqué contre la couche d'adhésif de la face principale du plateau ;
et pour la ou les éventuelle(s) autre(s) embase(s) socle(s) (11) de la structure de raidissage, réalisation des opérations successives suivantes :
- formation d'un plateau (3) non polymérisé par drapage de strates de renfort fibreux pré-imprégné avec une résine thermodurcissable sur la surface de la pièce à raidir ;
- mise en place d'au moins un corps (5) sur la face principale (17) du plateau non polymérisé, le premier chant (8) longitudinal de chaque corps étant plaqué contre la face principale du plateau ;
- formation des première (14) et deuxième (15) languettes, respectivement, par drapage de premières strates de renfort fibreux pré-imprégné avec une résine thermodurcissable sur une première partie de la face principale (17) du plateau et remontant sur la première face latérale (6) du corps, et par drapage de deuxièmes strates de renfort fibreux pré-imprégné avec une résine thermodurcissable sur une deuxième partie de la face principale (17) du plateau, différente de la première partie, et remontant sur la deuxième face latérale (7) du corps ;
c) solidarisation de chaque embase socle (11) avec la surface de la pièce à raidir et du ou des corps par polymérisation totale de la résine thermodurcissable du plateau, des première et deuxième languettes et de la pièce.

3. Procédé de raidissage selon la revendication 1 ou la revendication 2, dans lequel, la structure de raidissage comportant au moins une embase chapeau, le procédé comprend en outre, avant l'opération de mise en place d'au moins un corps sur la face principale du plateau non polymérisé, la formation de ladite au moins une embase chapeau avec, pour chaque embase chapeau, la réalisation des opérations successives suivantes :
- formation d'un plateau non polymérisé par drapage de strates de renfort fibreux pré-imprégné avec une résine thermodurcissable sur un moule ;
- polymérisation totale de la résine thermodurcissable du plateau ;
- dépôt d'une première couche d'adhésif sur la face principale du plateau polymérisé ;
- mise en place d'au moins un corps sur la première couche d'adhésif, chaque corps étant positionné sur la face principale du plateau polymérisé, de préférence orthogonalement à ladite face principale, le deuxième chant longitudinal de chaque corps étant plaqué contre la première couche d'adhésif de la face principale du plateau ;
- dépôt d'une deuxième couche d'adhésif sur les première et deuxième faces latérales de chaque corps ;
- formation des première et deuxième languettes, respectivement, par drapage de premières strates de renfort fibreux pré-imprégné avec une résine thermodurcissable sur une première partie de la face principale du plateau recouverte de la première couche d'adhésif et remontant sur la première face latérale du corps recouverte de la deuxième couche d'adhésif, et par drapage de deuxièmes strates de renfort fibreux pré-imprégné avec une résine thermodurcissable sur une deuxième partie de la face principale du plateau recouverte de la première couche d'adhésif, différente de la première partie, et remontant sur la deuxième face latérale du corps recouverte de la deuxième couche d'adhésif ;
- polymérisation totale de l'adhésif des première et deuxième couches de la résine thermodurcissable des première et deuxième languettes ;
- retrait du moule.

4. Procédé de raidissage selon la revendication 1 ou la revendication 2, dans lequel, la structure de raidissage comportant au moins une embase chapeau, le procédé comprend en outre, avant l'opération de mise en place d'au moins un corps sur la face principale du plateau non polymérisé, la formation de ladite au moins une embase chapeau avec, pour chaque embase chapeau, les opérations successives suivantes :
- formation d'un plateau non polymérisé par drapage de strates de renfort fibreux pré-imprégné avec une résine thermodurcissable sur un moule ;
- polymérisation totale de la résine thermodurcissable du plateau ;
- mise en place d'un outil empreinte (20) sur la face principale du plateau polymérisé ;
- dépôt d'une première couche d'adhésif sur le plateau ;
- formation des première et deuxième languettes, respectivement, par drapage de premières strates de renfort fibreux pré-imprégné avec une résine thermodurcissable sur une première partie de la face principale du plateau recouverte de la première couche d'adhésif et remontant sur une première face latérale de l'outil empreinte, et par drapage de deuxièmes strates de renfort fibreux pré-imprégné avec une résine thermodurcissable sur une deuxième partie de la face principale du plateau recouverte de la première couche d'adhésif, différente de la première partie, et remontant sur une deuxième face latérale de l'outil empreinte ;
- polymérisation partielle de la résine thermodurcissable des première et deuxième languettes et de l'adhésif de la première couche ;
- retrait de l'outil empreinte, moyennant quoi on forme un logement pour au moins un corps ;
- dépôt d'une deuxième couche d'adhésif dans le logement sur la face principale du plateau polymérisé ;
- dépôt d'une troisième couche d'adhésif sur les première et deuxième faces latérales de chaque corps ;
- mise en place, dans chaque logement, d'au moins un corps sur la deuxième couche d'adhésif, chaque corps étant positionné sur la face principale du plateau polymérisé, de préférence orthogonalement à ladite face principale, le deuxième chant longitudinal de chaque corps étant plaqué contre la deuxième couche d'adhésif de la face principale du plateau ;
- polymérisation totale de l'adhésif des première, deuxième et troisième couches et de la résine thermodurcissable des première et deuxième languettes de chaque embase chapeau.

5. Procédé de raidissage selon l'une quelconque des revendications 1 à 4, dans lequel, la structure de raidissage comportant plusieurs corps, au moins deux corps sont disposés adjacents et sont reliés par au moins une embase, de préférence une embase chapeau.

6. Procédé de raidissage selon l'une quelconque des revendications 1 à 5, dans lequel, pour au moins une embase, les premières et secondes strates de renfort fibreux destinés à former les première et deuxième languettes sont un même ensemble de strates qui recouvre également la face du plateau qui est opposée à la face principale.

7. Procédé de raidissage selon l'une quelconque des revendications 1 à 6, dans lequel le premier chant (8) d'au moins un corps présente une courbure simple ou une double courbure.

8. Procédé de raidissage selon la revendication 7, dans laquelle le deuxième chant (9) d'au moins un corps est rectiligne.

9. Procédé de raidissage selon l'une quelconque des revendications 3 à 8, dans lequel chaque corps étant muni d'au moins une embase chapeau (12) et d'au moins une embase socle (11), une embase chapeau étant une embase dont le plateau est solidaire du deuxième chant (9) longitudinal d'un corps, et dans lequel la structure de raidissage comprenant plusieurs corps, au moins une embase (11 ; 12) est disposée à cheval sur au moins deux corps adjacents afin de les solidariser.

10. Procédé de raidissage selon la revendication 9, dans lequel chaque corps est relié à au moins un corps adjacent par au moins une embase (11 ; 12).

11. Procédé de raidissage selon la revendication 9 ou la revendication 10, dans lequel le logement (16) de l'embase disposée à cheval sur au moins deux corps adjacents a une forme de croix.

12. Procédé de raidissage selon l'une quelconque des revendications 9 à 11, dans lequel l'embase disposée à cheval sur au moins deux corps adjacents est une embase chapeau (12).

13. Pièce raidie obtenue par mise en œuvre du procédé selon l'une quelconque des revendications 1 à 12, la pièce à raidir étant un réflecteur d'antenne de satellite.

## Patentansprüche

1. Verfahren zum Versteifen eines Bauteils (22) durch eine Versteifungsstruktur (19), wobei das Bauteil aus einem Verbundwerkstoff besteht, dessen wärmehärtbares Harz nicht polymerisiert oder teilweise polymerisiert ist, und wobei die Versteifungsstruktur (19) mindestens eine der Oberflächen des Bauteils ausstattet, wobei die Versteifungsstruktur umfasst:
- mindestens einen sich gemäß einer Längsrichtung erstreckenden Körper (5), wobei jeder Körper einen ersten (8) und einen zweiten (9) entgegengesetzten Längsrand sowie eine erste (6) und eine zweite (7) entgegengesetzte Seitenfläche aufweist;
- mindestens eine Basis (11; 12), davon mindestens eine Sockelbasis (11), wobei jede Basis (11; 12) mit einer Platte (13) und einer ersten (14) und einer zweiten (15) Lasche versehen ist, die zusammen mit der Platte eine Aufnahme (16) für mindestens einen Körper begrenzen, wobei sich die erste und die zweite Lasche von einer Hauptfläche (17) der Platte erstrecken und jeweils an der ersten und der zweiten Seitenfläche des Körpers anliegen;
wobei jede Basis, deren Platte mit dem ersten Längsrand (8) eines Körpers verbunden ist, eine Sockelbasis (11) ist, und die Platte jeder Sockelbasis dazu bestimmt ist, an der Oberfläche des zu versteifenden Bauteils anzuliegen; und
wobei jeder Körper und jede Basis aus wärmehärtbarem Verbundwerkstoff bestehen;
wobei das Verfahren durch die folgenden aufeinanderfolgenden Schritte gekennzeichnet ist:
a) Bereitstellen des oder der Körper (5) aus wärmehärtbarem Verbundwerkstoff der Versteifungsstruktur;
b) für jede Sockelbasis (11) der Versteifungsstruktur, Durchführen der folgenden aufeinanderfolgenden Arbeitsgänge:
- Bilden einer nicht polymerisierten Platte (3) durch Aufbringen von mit einem wärmehärtbaren Harz vorimprägnierten Faserverstärkungslagen auf die Oberfläche des zu versteifenden Bauteils;
- Anordnen mindestens eines Körpers (5) auf der Hauptfläche (17) der nicht polymerisierten Platte, wobei der erste Längsrand (8) jedes Körpers an der Hauptfläche der Platte anliegt;
- Bilden der ersten (14) und zweiten (15) Lasche jeweils durch Aufbringen erster mit einem wärmehärtbaren Harz vorimprägnierter Faserverstärkungslagen auf einen ersten Teil der Hauptfläche (17) der Platte und entlang der ersten Seitenfläche (6) des Körpers nach oben verlaufend sowie durch Aufbringen zweiter mit einem wärmehärtbaren Harz vorimprägnierter Faserverstärkungslagen auf einen zweiten, vom ersten Teil verschiedenen Teil der Hauptfläche (17) der Platte und entlang der zweiten Seitenfläche (7) des Körpers nach oben verlaufend;
c) Verbinden jeder Sockelbasis (11) mit der Oberfläche des zu versteifenden Bauteils und des oder der Körper durch vollständige Polymerisation des wärmehärtbaren Harzes der Platte, der ersten und zweiten Laschen und des Bauteils.

2. Verfahren zum Versteifen eines Bauteils (22) durch eine Versteifungsstruktur (19), wobei das Bauteil aus einem Verbundwerkstoff besteht, dessen wärmehärtbares Harz nicht polymerisiert oder teilweise polymerisiert ist, und wobei die Versteifungsstruktur (19) mindestens eine der Oberflächen des Bauteils ausstattet, wobei die Versteifungsstruktur umfasst:
- mindestens einen sich gemäß einer Längsrichtung erstreckenden Körper (5), wobei jeder Körper einen ersten (8) und einen zweiten (9) entgegengesetzten Längsrand sowie eine erste (6) und eine zweite (7) entgegengesetzte Seitenfläche aufweist;
- mindestens eine Basis (11; 12), davon mindestens eine Sockelbasis (11), wobei jede Basis (11; 12) mit einer Platte (13) und einer ersten (14) und einer zweiten (15) Lasche versehen ist, die zusammen mit der Platte eine Aufnahme (16) für mindestens einen Körper begrenzen, wobei sich die erste und die zweite Lasche von einer Hauptfläche (17) der Platte erstrecken und jeweils an der ersten und der zweiten Seitenfläche des Körpers anliegen;
wobei jede Basis, deren Platte mit dem ersten Längsrand (8) eines Körpers verbunden ist, eine Sockelbasis (11) ist, und die Platte jeder Sockelbasis dazu bestimmt ist, an der Oberfläche des zu versteifenden Bauteils anzuliegen; und
wobei jeder Körper und jede Basis aus wärmehärtbarem Verbundwerkstoff bestehen;
wobei das Verfahren durch die folgenden aufeinanderfolgenden Schritte gekennzeichnet ist:
a) Bereitstellen des oder der Körper (5) aus wärmehärtbarem Verbundwerkstoff der Versteifungsstruktur;
b) für jede Sockelbasis (11) der Versteifungsstruktur, Durchführen der folgenden aufeinanderfolgenden Arbeitsgänge:
- Bilden einer nicht polymerisierten Platte durch Aufbringen von mit einem wärmehärtbaren Harz vorimprägnierten Faserverstärkungslagen auf die Oberfläche des zu versteifenden Bauteils;
- Anordnen eines Formwerkzeugs (20) auf der Hauptfläche (17) der nicht polymerisierten Platte;
- Bilden der ersten und zweiten Lasche jeweils durch Aufbringen erster mit einem wärmehärtbaren Harz vorimprägnierter Faserverstärkungslagen auf einen ersten Teil der Hauptfläche (17) der Platte und entlang der ersten Seitenfläche des Formwerkzeugs nach oben verlaufend sowie durch Aufbringen zweiter mit einem wärmehärtbaren Harz vorimprägnierter Faserverstärkungslagen auf einen zweiten, vom ersten Teil verschiedenen Teil der Hauptfläche der Platte und entlang der zweiten Seitenfläche des Formwerkzeugs nach oben verlaufend;
- teilweise Polymerisation des wärmehärtbaren Harzes des Bauteils, der Platte und der ersten und zweiten Lasche;
- Entfernen des Formwerkzeugs (20), wodurch eine Aufnahme (16) für mindestens einen Körper gebildet wird;
- Auftragen einer Klebstoffschicht in der Aufnahme auf die Hauptfläche der teilweise polymerisierten Platte;
- Anordnen mindestens eines Körpers in der Aufnahme auf der Klebstoffschicht, wobei der erste Längsrand jedes Körpers an der Klebstoffschicht der Hauptfläche der Platte anliegt;
und für die etwaige(n) andere(n) Sockelbasis(en) (11) der Versteifungsstruktur Durchführen der folgenden aufeinanderfolgenden Arbeitsgänge:
- Bilden einer nicht polymerisierten Platte (3) durch Aufbringen von mit einem wärmehärtbaren Harz vorimprägnierten Faserverstärkungslagen auf die Oberfläche des zu versteifenden Bauteils;
- Anordnen mindestens eines Körpers (5) auf der Hauptfläche (17) der nicht polymerisierten Platte, wobei der erste Längsrand (8) jedes Körpers an der Hauptfläche der Platte anliegt;
- Bilden der ersten (14) und zweiten (15) Lasche jeweils durch Aufbringen erster mit einem wärmehärtbaren Harz vorimprägnierter Faserverstärkungslagen auf einen ersten Teil der Hauptfläche (17) der Platte und entlang der ersten Seitenfläche (6) des Körpers nach oben verlaufend sowie durch Aufbringen zweiter mit einem wärmehärtbaren Harz vorimprägnierter Faserverstärkungslagen auf einen zweiten, vom ersten Teil verschiedenen Teil der Hauptfläche (17) der Platte und entlang der zweiten Seitenfläche (7) des Körpers nach oben verlaufend;
c) Verbinden jeder Sockelbasis (11) mit der Oberfläche des zu versteifenden Bauteils und des oder der Körper durch vollständige Polymerisation des wärmehärtbaren Harzes der Platte, der ersten und zweiten Laschen und des Bauteils.

3. Verfahren zum Versteifen nach Anspruch 1 oder Anspruch 2, wobei die Versteifungsstruktur mindestens eine Hutbasis umfasst, wobei das Verfahren ferner vor dem Arbeitsgang des Anordnens mindestens eines Körpers auf der Hauptfläche der nicht polymerisierten Platte das Bilden der mindestens einen Hutbasis umfasst mit für jede Hutbasis der Durchführung der folgenden aufeinanderfolgenden Arbeitsgänge:
- Bilden einer nicht polymerisierten Platte durch Aufbringen von mit einem wärmehärtbaren Harz vorimprägnierten Faserverstärkungslagen auf eine Form;
- vollständige Polymerisation des wärmehärtbaren Harzes der Platte;
- Auftragen einer ersten Klebstoffschicht auf die Hauptfläche der polymerisierten Platte;
- Anordnen mindestens eines Körpers auf der ersten Klebstoffschicht, wobei jeder Körper auf der Hauptfläche der polymerisierten Platte angeordnet ist, vorzugsweise orthogonal zu der Hauptfläche, wobei der zweite Längsrand jedes Körpers an der ersten Klebstoffschicht der Hauptfläche der Platte anliegt;
- Auftragen einer zweiten Klebstoffschicht auf die erste und die zweite Seitenfläche jedes Körpers;
- Bilden der ersten und zweiten Lasche jeweils durch Aufbringen erster mit einem wärmehärtbaren Harz vorimprägnierter Faserverstärkungslagen auf einen ersten Teil der mit der ersten Klebstoffschicht bedeckten Hauptfläche der Platte und entlang der mit der zweiten Klebstoffschicht bedeckten ersten Seitenfläche des Körpers nach oben verlaufend sowie durch Aufbringen zweiter mit einem wärmehärtbaren Harz vorimprägnierter Faserverstärkungslagen auf einen zweiten, vom ersten Teil verschiedenen Teil der mit der ersten Klebstoffschicht bedeckten Hauptfläche der Platte und entlang der mit der zweiten Klebstoffschicht bedeckten zweiten Seitenfläche des Körpers nach oben verlaufend;
- vollständige Polymerisation des Klebstoffs der ersten und zweiten Schicht des wärmehärtbaren Harzes der ersten und zweiten Lasche;
- Entfernen der Form.

4. Verfahren zum Versteifen nach Anspruch 1 oder Anspruch 2, wobei die Versteifungsstruktur mindestens eine Hutbasis umfasst, wobei das Verfahren ferner vor dem Arbeitsgang des Anordnens mindestens eines Körpers auf der Hauptfläche der nicht polymerisierten Platte das Bilden der mindestens einen Hutbasis umfasst mit für jede Hutbasis den folgenden aufeinanderfolgenden Arbeitsgängen:
- Bilden einer nicht polymerisierten Platte durch Aufbringen von mit einem wärmehärtbaren Harz vorimprägnierten Faserverstärkungslagen auf eine Form;
- vollständige Polymerisation des wärmehärtbaren Harzes der Platte;
- Anordnen eines Formwerkzeugs (20) auf der Hauptfläche der polymerisierten Platte;
- Auftragen einer ersten Klebstoffschicht auf die Platte;
- Bilden der ersten und zweiten Lasche jeweils durch Aufbringen erster mit einem wärmehärtbaren Harz vorimprägnierter Faserverstärkungslagen auf einen ersten Teil der mit der ersten Klebstoffschicht bedeckten Hauptfläche der Platte und entlang einer ersten Seitenfläche des Formwerkzeugs nach oben verlaufend sowie durch Aufbringen zweiter mit einem wärmehärtbaren Harz vorimprägnierter Faserverstärkungslagen auf einen zweiten, vom ersten Teil verschiedenen Teil der mit der ersten Klebstoffschicht bedeckten Hauptfläche der Platte und entlang einer zweiten Seitenfläche des Formwerkzeugs nach oben verlaufend;
- teilweise Polymerisation des wärmehärtbaren Harzes der ersten und zweiten Lasche und des Klebstoffs der ersten Schicht;
- Entfernen des Formwerkzeugs, wodurch eine Aufnahme für mindestens einen Körper gebildet wird;
- Auftragen einer zweiten Klebstoffschicht in der Aufnahme auf die Hauptfläche der polymerisierten Platte;
- Auftragen einer dritten Klebstoffschicht auf die erste und die zweite Seitenfläche jedes Körpers;
- Anordnen von mindestens einem Körper in jeder Aufnahme auf der zweiten Klebstoffschicht, wobei jeder Körper auf der Hauptfläche der polymerisierten Platte angeordnet ist, vorzugsweise orthogonal zu der Hauptfläche, wobei der zweite Längsrand jedes Körpers an der zweiten Klebstoffschicht der Hauptfläche der Platte anliegt;
- vollständige Polymerisation des Klebstoffs der ersten, zweiten und dritten Schicht und des wärmehärtbaren Harzes der ersten und zweiten Lasche jeder Hutbasis.

5. Verfahren zum Versteifen nach einem der Ansprüche 1 bis 4, wobei die Versteifungsstruktur mehrere Körper umfasst, wobei mindestens zwei Körper benachbart angeordnet sind und durch mindestens eine Basis, vorzugsweise eine Hutbasis, verbunden sind.

6. Verfahren zum Versteifen nach einem der Ansprüche 1 bis 5, wobei für mindestens eine Basis die ersten und zweiten Faserverstärkungslagen, die zum Bilden der ersten und zweiten Lasche bestimmt sind, ein und derselbe Lagensatz sind, der ebenfalls die der Hauptfläche gegenüberliegende Fläche der Platte bedeckt.

7. Verfahren zum Versteifen nach einem der Ansprüche 1 bis 6, wobei der erste Rand (8) von mindestens einem Körper eine einfache Krümmung oder eine doppelte Krümmung aufweist.

8. Verfahren zum Versteifen nach Anspruch 7, wobei der zweite Rand (9) von mindestens einem Körper geradlinig ist.

9. Verfahren zum Versteifen nach einem der Ansprüche 3 bis 8, wobei jeder Körper mit mindestens einer Hutbasis (12) und mindestens einer Sockelbasis (11) versehen ist, wobei eine Hutbasis eine Basis ist, deren Platte mit dem zweiten Längsrand (9) eines Körpers verbunden ist, und wobei die Versteifungsstruktur, die mehrere Körper umfasset, mindestens eine Basis (11; 12) auf mindestens zwei benachbarten Körpern aufsitzt, um diese miteinander zu verbinden.

10. Verfahren zum Versteifen nach Anspruch 9, wobei jeder Körper durch mindestens eine Basis (11; 12) mit mindestens einem benachbarten Körper verbunden ist.

11. Verfahren zum Versteifen nach Anspruch 9 oder Anspruch 10, wobei die Aufnahme (16) der auf mindestens zwei benachbarten Körpern aufsitzenden Basis eine Kreuzform aufweist.

12. Verfahren zum Versteifen nach einem der Ansprüche 9 bis 11, wobei die auf mindestens zwei benachbarten Körpern aufsitzende Basis eine Hutbasis (12) ist.

13. Versteiftes Bauteil, erhalten durch Durchführung des Verfahrens nach einem der Ansprüche 1 bis 12, wobei das zu versteifende Bauteil ein Satellitenantennenreflektor ist.

## Claims

1. Method for stiffening a component (22) by a stiffening structure (19), the component being made of a composite material the thermosetting resin of which is not polymerised or partially polymerised, and the stiffening structure (19) being fitted to at least one of the surfaces of the component, the stiffening structure comprising:
- at least one body (5) extending in a longitudinal direction, each body having a first (8) and a second (9) longitudinal edge face on opposite sides, and a first (6) and a second (7) lateral face on opposite sides;
- at least one base (11; 12) including at least one mounting base (11), each base (11; 12) being provided with a plate (13) and a first (14) and a second (15) tongue which delimit, with the plate, a housing (16) for at least one body, the first and the second tongue extending from a main face (17) of the plate and being pressed respectively against the first and the second lateral face of the body;
each base the plate of which is secured to the first longitudinal edge face (8) of a body being a mounting base (11), the plate of each mounting base being intended to be pressed against the surface of the component to be stiffened; and
each body and each base being made of thermosetting composite material;
the method being **characterised by** the following successive steps:
a) supplying the body(ies) (5) made of thermosetting composite material of the stiffening structure;
b) for each mounting base (11) of the stiffening structure, performing the following successive operations:
- forming a non-polymerised plate (3) by draping layers of fibrous reinforcement pre-impregnated with a thermosetting resin on the surface of the component to be stiffened;
- placing at least one body (5) on the main face (17) of the non-polymerised plate, the first longitudinal edge face (8) of each body being pressed against the main face of the plate;
- forming the first (14) and second (15) tongues, respectively, by draping first layers of fibrous reinforcement pre-impregnated with a thermosetting resin on a first portion of the main face (17) of the plate and rising up on a first lateral face (6) of the body, and by draping second layers of fibrous reinforcement pre-impregnated with a thermosetting resin on a second portion of the main face (17) of the plate, different from the first portion, and rising up on a second lateral face (7) of the body;
c) securing each mounting base (11) with the surface of the component to be stiffened and of the body(ies) by totally polymerising the thermosetting resin of the plate, of the first and second tongues and of the component.

2. Method for stiffening a component (22) by a stiffening structure (19), the component being made of a composite material the thermosetting resin of which is not polymerised or partially polymerised, and the stiffening structure (19) being fitted to at least one of the surfaces of the component, the stiffening structure comprising:
- at least one body (5) extending in a longitudinal direction, each body having a first (8) and a second (9) longitudinal edge face on opposite sides, and a first (6) and a second (7) lateral face on opposite sides;
- at least one base (11; 12) including at least one mounting base (11), each base (11; 12) being provided with a plate (13) and a first (14) and a second (15) tongue which delimit, with the plate, a housing (16) for at least one body, the first and the second tongue extending from a main face (17) of the plate and being pressed respectively against the first and the second lateral face of the body;
each base the plate of which is secured to the first longitudinal edge face (8) of a body being a mounting base (11), the plate of each mounting base being intended to be pressed against the surface of the component to be stiffened; and
each body and each base being made of thermosetting composite material;
the method being **characterised by** the following successive steps:
a) supplying the body(ies) (5) made of thermosetting composite material of the stiffening structure;
b) for at least one mounting base (11) of the stiffening structure, performing the following successive operations:
- forming a non-polymerised plate by draping layers of fibrous reinforcement pre-impregnated with a thermosetting resin on the surface of the component to be stiffened;
- placing an impression tool (20) on the main face (17) of the non-polymerised plate;
- forming the first and second tongues, respectively, by draping first layers of fibrous reinforcement pre-impregnated with a thermosetting resin on a first portion of the main face (17) of the plate and rising up on a first lateral face of the impression tool, and by draping second layers of fibrous reinforcement pre-impregnated with a thermosetting resin on a second portion of the main face of the plate, different from the first portion, and rising up on a second lateral face of the impression tool;
- partially polymerising the thermosetting resin of the component, of the plate and of the first and second tongues;
- removing the impression tool (20), whereby a housing (16) is formed for at least one body;
- depositing an adhesive layer in the housing on the main face of the partially polymerised plate;
- placing at least one body in the housing on the adhesive layer, the first longitudinal edge face of each body being pressed against the adhesive layer of the main face of the plate;
and for the other mounting base(s) (11) of the stiffening structure, if any, performing the following successive operations:
- forming a non-polymerised plate (3) by draping layers of fibrous reinforcement pre-impregnated with a thermosetting resin on the surface of the component to be stiffened;
- placing at least one body (5) on the main face (17) of the non-polymerised plate, the first longitudinal edge face (8) of each body being pressed against the main face of the plate;
- forming the first (14) and second (15) tongues, respectively, by draping first layers of fibrous reinforcement pre-impregnated with a thermosetting resin on a first portion of the main face (17) of the plate and rising up on a first lateral face (6) of the body, and by draping second layers of fibrous reinforcement pre-impregnated with a thermosetting resin on a second portion of the main face (17) of the plate, different from the first portion, and rising up on a second lateral face (7) of the body;
c) securing each mounting base (11) with the surface of the component to be stiffened and of the body(ies) by totally polymerising the thermosetting resin of the plate, of the first and second tongues and of the component.

3. Method according to claim 1 or claim 2, wherein, the stiffening structure including at least one cover base, the method further comprises, before the operation of placing at least one body on the main face of the non-polymerised plate, forming said at least one cover base with, for each cover base, performing the following successive operations:
- forming a non-polymerised plate by draping layers of fibrous reinforcement pre-impregnated with a thermosetting resin on a mould;
- totally polymerising the thermosetting resin of the plate;
- depositing a first adhesive layer on the main face of the polymerised plate;
- placing at least one body on the first adhesive layer, each body being positioned on the main face of the polymerised plate, preferably orthogonally to said main face, the second longitudinal edge face of each body being pressed against the first adhesive layer of the main face of the plate;
- depositing a second adhesive layer on the first and second lateral faces of each body;
- forming the first and second tongues, respectively, by draping first layers of fibrous reinforcement pre-impregnated with a thermosetting resin on a first portion of the main face of the plate covered by the first adhesive layer and rising up on the first lateral face of the body covered with the second adhesive layer, and by draping second layers of fibrous reinforcement pre-impregnated with a thermosetting resin on a second portion of the main face of the plate covered by the first adhesive layer, different from the first portion, and rising up on the second lateral face of the body covered with the second adhesive layer;
- totally polymerising the adhesive of the first and second layers and of the thermosetting resin of the first and second tongues;
- removing the mould.

4. Method according to claim 1 or claim 2, wherein, the stiffening structure including at least one cover base, the method further comprises, before the operation of placing at least one body on the main face of the non-polymerised plate, forming said at least one cover base with, for each cover base, the following successive operations:
- forming a non-polymerised plate by draping layers of fibrous reinforcement pre-impregnated with a thermosetting resin on a mould;
- totally polymerising the thermosetting resin of the plate;
- placing an impression tool (20) on the main face of the polymerised plate;
- depositing a first adhesive layer on the plate;
- forming the first and second tongues, respectively, by draping first layers of fibrous reinforcement pre-impregnated with a thermosetting resin on a first portion of the main face of the plate covered by the first adhesive layer and rising up on a first lateral face of the impression tool, and by draping second layers of fibrous reinforcement pre-impregnated with a thermosetting resin on a second portion of the main face of the plate covered by the first adhesive layer, different from the first portion, and rising up on a second lateral face of the impression tool;
- partially polymerising the thermosetting resin of the first and second tongues and of the adhesive of the first layer;
- removing the impression tool, whereby a housing is formed for at least one body;
- depositing a second adhesive layer in the housing on the main face of the polymerised plate;
- depositing a third adhesive layer on the first and second lateral faces of each body;
- placing, in each housing, at least one body on the second adhesive layer, each body being positioned on the main face of the polymerised plate, preferably orthogonally to said main face, the second longitudinal edge of each body being pressed against the second adhesive layer of the main face of the plate;
- totally polymerising the adhesive of the first, second and third layers and of the thermosetting resin of the first and second tongues of each cover base.

5. Method according to any one of claims 1 to 4, wherein, the stiffening structure including a plurality of bodies, at least two bodies are disposed adjacent and are connected by at least one base, preferably a cover base.

6. Method according to any one of claims 1 to 5, wherein, for at least one base, the first and second layers of fibrous reinforcement intended to form the first and second tongues are the same set of layers that also cover the face of the plate that is opposite the main face.

7. Method according to any one of claims 1 to 6, wherein the first edge face (8) of at least one body has a single curve or a double curve.

8. Method according to claim 7, wherein the second edge face (9) of at least one body is straight.

9. Method according to any one of claims 3 to 8, wherein each body is provided with at least one cover base (12) and at least one mounting base (11), a cover base being a base the plate of which is secured to the second longitudinal edge face (9) of a body, and wherein, the stiffening structure including a plurality of bodies, at least one base (11; 12) is disposed straddling at least two adjacent bodies in order to secure them.

10. Method according to claim 9, wherein each body is connected to at least one adjacent body by at least one base (11; 12).

11. Method according to claim 9 or claim 10, wherein the housing (16) of the base disposed straddling at least two adjacent bodies has a cross shape.

12. Method according to any one of claims 9 to 11, wherein the base disposed straddling at least two adjacent bodies is a cover base (12).

13. Stiffened component obtained by implementing the method according to any one of claims 1 to 12, the component to be stiffened being a satellite antenna reflector.
